# EUROPEAN PATENT SPECIFICATION

(11) **EP 2 434 806 B1**
(45) Date of publication and mention of the grant of the patent: **12.11.2014**
(21) Application number: 10788959.4
(22) Date of filing: 18.06.2010
(51) Int. Cl.: H04W 24/10

(54) **METHOD, DEVICE AND SYSTEM FOR CELL MEASUREMENT AND REPORT**
VERFAHREN, VORRICHTUNG UND SYSTEM ZUR ZELLMESSUNG UND BERICHTERSTATTUNG DARÜBER
PROCÉDÉ, DISPOSITIF ET SYSTÈME DE MESURE ET DE RAPPORT DE CELLULE

(30) Priority: 19.06.2009 CN 200910148248
(43) Date of publication of application: 28.03.2012
(73) Proprietor: Huawei Technologies Co., Ltd., Shenzhen, Guangdong 518129 (CN)
(72) Inventor: TANG, Xiaowei, Shenzhen Guangdong 518129 (CN)
(74) Representative: Thun, Clemens
(86) International application number: PCT/CN2010/074085
(87) International publication number: WO 2010/145563

(56) References cited:
- EP-A1- 1 788 832
- WO-A1-2009/066724
- CN-A- 101 252 760
- CN-A- 101 252 761
- US-A1- 2005 250 495

## Description

### FIELD OF THE INVENTION

The present invention relates to the field of communications, and in particular, to a method, a device and a system for performing measurement and report on a cell.

### BACKGROUND OF THE INVENTION

In a wireless communication system, for connection state mobility management of a UE (User Equipment, user equipment), a network side judges whether a handover procedure is initiated according to quality information of a current cell, where the quality information is reported by the UE, and necessarily, the network side is required to deliver needed measurement control to the UE before the handover is initiated.

In an LTE (Long Term Evolution, long term evolution) system, measurement control information relevant to handover mainly includes two parts of content: a measurement object and a measurement report, that is, one measurement object and one measurement report may uniquely determine one measurement. Furthermore, a protocol specifies that the same measurement object or measurement report may be used by a plurality of measurements simultaneously.

A measurement object mainly includes measured neighbor cell information and measured blacklist cell information, and the protocol explicitly specifies that, for measurement control at the same frequency point, the same measurement obj ect must be used, and therefore, relevant neighbor cell information and relevant blacklist cell information must be used to perform measurement.

The prior art has the following disadvantages: For some measurements, the same neighbor cell information and the same blacklist cell information are not expected to be used, for example, intra-frequency handover and ICIC (Inter Cell Interference Coordination, inter cell interference coordination), but the prior art specifies that they must use the same measurement object, for example, use the same neighbor cell information and the same blacklist cell information. In this way, an unnecessary measurement interferes with a normal measurement, which is unfavorable for a UE to quickly and accurately measure a cell and report.

US 2005/0250495A1 discloses a method for requesting a measurement to be performed at a communication station of a radio communication system such as a WLAN.

### SUMMARY OF THE INVENTION

Embodiments of the present invention provide a method, a device and a system for measuring a cell and reporting, so as to enable a UE to more accurately and quickly measure a cell and report.

In order to achieve the foregoing objective, the embodiments of the present invention adopt the following technical solutions.

A method for performing measurement and report on a cell includes:
receiving measurement control information from a network device, where the measurement control information includes a measurement object and a measurement object type parameter, and the measurement object includes neighbor cell information and blacklist cell information; and
selectively measuring a neighbor cell according to the neighbor cell information and/or a blacklist cell according to the blacklist cell information and reporting measuring result of the neighbor cell and/or the blacklist cell;
wherein the selectively measuring the neighbor cell according to the neighbor cell information and/or the blacklist cell according to the blacklist cell information and reporting the measuring result of the neighbor cell and/or the blacklist cell specifically includes:
measuring the neighbor cell and the blacklist cell and reporting the measuring result of the neighbor cell and the blacklist cell when the measurement object type parameter instructs that the neighbor cell and the blacklist cell are measured and the measuring result of the neighbor cell and the blacklist cell are reported;
measuring the blacklist cell and reporting the measuring result of the blacklist cell without measuring the neighbor cell or reporting the measuring result of the neighbor cell when the measurement object type parameter instructs that the blacklist cell is measured and the measuring result of the blacklist cell is reported;
measuring the neighbor cell and reporting the measuring result of the neighbor cell without measuring the blacklist cell or reporting the measuring result of the blacklist cell when the measurement object type parameter instructs that the neighbor cell is measured and the measuring result of the neighbor cell is reported; and
not measuring the neighbor cell and the blacklist cell nor reporting the measuring result of the neighbor cell and the blacklist cell when the measurement object type parameter instructs that the neighbor cell and the blacklist cell are not measured nor the measuring result of the neighbor cell and the blacklist cell are reported.

A kind of user equipment includes:
a receiving unit, configured to receive measurement control information from a network device, where the measurement control information includes a measurement object and a measurement object type parameter, and the measurement object includes neighbor cell information and blacklist cell information; and
a selective measuring and reporting unit, configured to selectively measure a neighbor cell according to the neighbor cell information and/or a blacklist cell according to the blacklist cell information and report measuring result of the neighbor cell and the blacklist cell;
wherein the selective measuring and reporting unit is specifically configured to:
measure the neighbor cell and the blacklist cell and report the measuring result of the neighbor cell and the blacklist cell when the measurement object type parameter instructs that the neighbor cell and the blacklist cell are measured and the measuring result of the neighbor cell and the blacklist cell are reported;
measure the blacklist cell and report the measuring result of the blacklist cell without measuring the neighbor cell or reporting the measuring result of the neighbor cell when the measurement object type parameter instructs that the blacklist cell is measured and the measuring result of the blacklist cell is reported;
measure the neighbor cell and report the measuring result of the neighbor cell without measuring the blacklist cell or reporting the blacklist cell when the measurement object type parameter instructs that the neighbor cell is measured and the measuring result of the neighbor cell is reported; and
not to measure the neighbor cell and the blacklist cell nor report the measuring result of the neighbor cell and the blacklist cell when the measurement object type parameter instructs that the neighbor cell and the blacklist cell are not measured nor the measuring result of the neighbor cell and the blacklist cell are reported.

A network device includes:
a measurement control information generation unit, configured to generate measurement control information, where the measurement control information includes a measurement object and a measurement object type parameter, the measurement object includes neighbor cell information and blacklist cell information, the measurement object type parameter is used to instruct a user equipment to selectively measure a neighbor cell according to the neighbor cell information and/or a blacklist cell according to the blacklist cell information; and
a sending unit, configured to send the measurement control information to the user equipment so that the user equipment is instructed by the measurement object type parameter to selectively measure the neighbor cell according to the neighbor cell information and/or the blacklist cell according to the blacklist cell information, and report measuring result of the neighbor cell and/or the blacklist cell.

A communication system includes:
a network device is configured to generate measurement control information, wherein the measurement control information includes a measurement object and a measurement object type parameter, and the measurement object includes neighbor cell information and blacklist cell information; and send the measurement control information to the user equipment; and
the user equipment is configured to receive the measurement control information from the network device, wherein the measurement control information includes the measurement object type parameter and the measurement object; and selectively measure a neighbor cell according to the neighbor cell information and/or a blacklist cell according to the blacklist cell information, and report measuring result of the neighbor cell and the blacklist cell informati;
wherein the user equipment is specifically configured to:
receive the measurement control information from the network device, wherein the measurement control information comprises the measurement object type parameter and the measurement object;
measure the neighbor cell and the blacklist cell and report the measuring result of the neighbor cell and the blacklist cell when the measurement object type parameter instructs that the neighbor cell and the blacklist cell are measured and the measuring result of the neighbor cell and the blacklist cell are reported;
measure the blacklist cell and report the measuring result of the blacklist cell without measuring the neighbor cell or reporting the measuring result of the neighbor cell when the measurement object type parameter instructs that the blacklist cell is measured and the measuring result of the blacklist cell is reported;
measure the neighbor cell and report the measuring result of the neighbor cell without measuring the blacklist cell or reporting the measuring result of the blacklist cell when the measurement object type parameter instructs that the neighbor cell is measured and the measuring result of the neighbor cell is reported; and
not to measure the neighbor cell and the blacklist cell nor report the measuring result of the neighbor cell and the blacklist cell when the measurement object type parameter instructs that the neighbor cell and the blacklist cell are not measured nor the measuring result of the neighbor cell and the blacklist cell are reported.

With the method, the device and the system for performing measurement and report on a cell provided in the embodiments of the present invention, for the same frequency point, the network device adds a measurement object type parameter to delivered measurement control information, and by parsing this parameter, the user equipment distinguishes, measures, and reports neighbor cell information and blacklist cell information which are to be measured and reported currently. In this way, the constraint that the same frequency point uses one measurement object can still be maintained, so as to reduce implementation complexity of the user equipment; meanwhile, for different measurements, measurement objects may be distinguished to some extent, so that the different measurements may be triggered by different measuring and reporting conditions, and therefore, measuring and reporting can be performed more quickly and accurately.

### BRIEF DESCRIPTION OF THE DRAWINGS

To describe the technical solutions in the embodiments of the present invention or in the prior art more clearly, the accompanying drawings required for describing the embodiments or the prior art are introduced briefly in the following. Apparently, the accompanying drawings in the following descriptions are merely some embodiments of the present invention, and persons of ordinary skill in the art may also obtain other drawings according to these accompanying drawings without creative efforts.
FIG. 1 is a block diagram showing a procedure of a method for performing measurement and report on a cell according to a first embodiment of the present invention;
FIG. 2 is a block diagram showing a structure of user equipment according to a second embodiment of the present invention;
FIG. 3 is a block diagram showing a structure of a network device according to a third embodiment of the present invention; and
FIG. 4 is a block diagram showing a structure of a communication system according to a fourth embodiment of the present invention.

### DETAILED DESCRIPTION OF THE EMBODIMENTS

The technical solutions in the embodiments of the present invention are clearly and fully described in the following with reference to the accompanying drawings in the embodiments of the present invention. Obviously, the embodiments to be described are only a part rather than all of the embodiments of the present invention. Based on the embodiments of the present invention, all other embodiments obtained by persons of ordinary skill in the art without creative efforts shall fall within the protection scope of the present invention.

### Embodiment 1

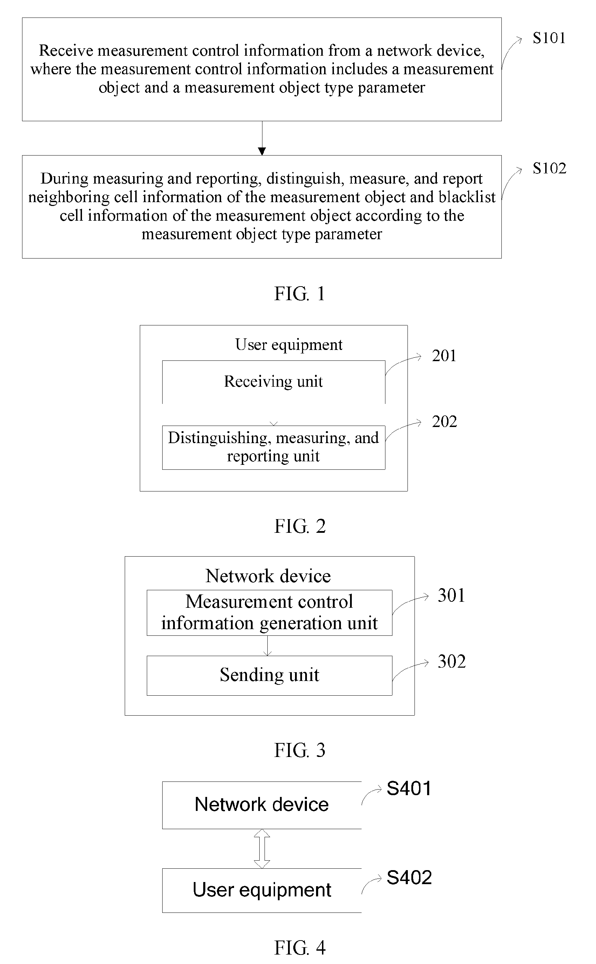

A method for performing measurement and report on a cell is provided in an embodiment of the present invention. As shown in FIG. 1, steps of the method include:
S101: Receive measurement control information from a network device, where the measurement control information includes a measurement object and a measurement object type parameter.
S102: During measuring and reporting, selectively measure, and report neighbor cell information of the measurement object and blacklist cell information of the measurement object according to the measurement object type parameter.

Furthermore, the measurement control information in step S101 includes two parts of content: a measurement object and a measurement report, where the measurement object includes parameters such as neighbor cell information and blacklist cell information.

The blacklist cell mentioned in step S102 refers to that, if a cell is a cell in a blacklist, even if the UE measures the cell, the UE does not report.

With the method for performing measurement and report on a cell provided in this embodiment of the present invention, for the same frequency point, the network device adds a measurement object type parameter to delivered measurement control information, and by parsing this parameter, the user equipment distinguishes, measures, and reports neighbor cell information and blacklist cell information which are to be measured and reported currently. In this way, the constraint that the same frequency point uses one measurement obj ect can still be maintained, so as to reduce implementation complexity of the user equipment; meanwhile, for different measurements, measurement obj ects may be distinguished to some extent, so that the different measurements may be triggered by different measuring and reporting conditions, and therefore, measuring and reporting can be performed more quickly and accurately.

### Embodiment 2

According to Embodiment 1, as shown in FIG. 2, user equipment provided in an embodiment of the present invention includes a receiving unit 201, and a selective measuring, and reporting unit 202.

The receiving unit 201 is configured to receive measurement control information from a network device, where the measurement control information includes a measurement object and a measurement obj ect type parameter.

The selective measuring and reporting unit 202 is configured to selectively measure, and report neighbor cell information of the measurement object and blacklist cell information of the measurement object according to the measurement object type parameter during measuring and reporting.

Furthermore, the measurement control information received by the receiving unit 201 further includes a measurement report.

The user equipment provided in this embodiment of the present invention can receive the measurement control information including the measurement obj ect type parameter from the network device, and by parsing this parameter, can distinguish, measure, and report the neighbor cell information and the blacklist cell information which are to be measured and reported currently. In this way, the constraint that the same frequency point uses one measurement object can still be maintained, so as to reduce implementation complexity of the user equipment; meanwhile, for different measurements, measurement objects may be distinguished to some extent, so that the different measurements may be triggered by different measuring and reporting conditions, and therefore, measuring and reporting can be performed more quickly and accurately.

### Embodiment 3

According to Embodiment 1 and Embodiment 2, as shown in FIG. 3, a network device provided in an embodiment of the present invention includes a measurement control information generation unit 301, and a sending unit 302.

The measurement control information generation unit 301 is configured to generate measurement control information, where the measurement control information includes a measurement obj ect and a measurement obj ect type parameter.

The sending unit 302 is configured to send the measurement control information to user equipment.

Furthermore, the measurement control information generated by the measurement control information generation unit 301 further includes a measurement report.

The network device provided in this embodiment of the present invention can generate the measurement control information including the measurement object type parameter, and delivers the measurement control information to the user equipment, and by parsing this parameter, the user equipment selectively measures, and reports neighbor cell information and blacklist cell information which are to be measured and reported currently. In this way, the constraint that the same frequency point uses one measurement object can still be maintained, so as to reduce implementation complexity of the user equipment; meanwhile, for different measurements, measurement objects may be distinguished to some extent, so that the different measurements may be triggered by different measuring and reporting conditions, and therefore, measuring and reporting can be performed more quickly and accurately.

### Embodiment 4

As shown in FIG. 4, a communication system provided in an embodiment of the present invention includes a network device 401 and user equipment 402.

The network device 401 is configured to generate measurement control information, where the measurement control information includes a measurement object and a measurement object type parameter; and send the measurement control information to the user equipment 402.

The user equipment 402 is configured to receive the measurement control information from the network device 401, where the measurement control information includes the measurement object type parameter and the measurement object; and during measuring and reporting, selectively measure, and report neighbor cell information of the measurement object and blacklist cell information of the measurement object according to the measurement object type parameter.

Structures of the network device 401 and the user equipment 402 are the same as structures in the foregoing embodiments, and details are not described here again.

With the communication system provided in this embodiment of the present invention, for the same frequency point, the network device adds a measurement object type parameter to delivered measurement control information, and by parsing this parameter, the user equipment distinguishes, measures, and reports neighbor cell information and blacklist cell information which are to be measured and reported currently. In this way, the constraint that the same frequency point uses one measurement obj ect can still be maintained, so as to reduce implementation complexity of the user equipment; meanwhile, for different measurements, measurement objects may be distinguished to a certain extent, so that the different measurements may be triggered by different measuring and reporting conditions, and therefore, measuring and reporting can be performed more quickly and accurately.

### Embodiment 5

A method for performing measurement and report on a cell provided in an embodiment of the present invention may meet a requirement that measurement control on the same frequency point must be performed by using the same measurement obj ect.

A network device 401 generates measurement control information carrying a measurement object type parameter (Measobjtype), and delivers the measurement control information to a UE (User Equipment, user equipment). In addition, according to different application scenarios or protocol specifications, the generated measurement control information generally may further include: a measurement object (MeasObject), a measurement report (MeasReport), and frequency point information.

### Scenario 1

If the UE undergoes intra-frequency handover, cell handover priorities need to be distinguished through a configured CIO of a cell and blacklist cell information is used to limit a cell where handover is not allowed, and therefore, the UE needs to measure and report both neighbor cell information and blacklist cell information during measuring and reporting. Therefore, the network device may set the measurement object type parameter, Measobjtype, as normal in the generated measurement control information, and deliver the measurement control information to the UE, that is, instructing the UE to consider the neighbor cell information and the blacklist cell information during measuring and reporting.

After receiving the measurement control information from the network device, where the measurement control information includes the measurement object type parameter, according to instruction of the measurement object type parameter, the UE measures and reports the neighbor cell information of the measurement object and the blacklist cell information of the measurement obj ect.

### Scenario 2

If the UE undergoes intra-frequency inter cell interference coordination, ICIC, interference coordination needs to be performed on all intra-frequency neighbor cells without being distinguished, so that neighbor cell information and blacklist cell information are not expected to affect the interference coordination of the UE. Therefore, the network device may set the measurement object type parameter, Measobjtype, as no ncell and black cell in the generated measurement control information, and deliver the measurement control information to the UE, that is, instructing the UE not to consider the neighbor cell information and the blacklist cell information during measuring and reporting.

After receiving the measurement control information from the network device, where the measurement control information includes the measurement object type parameter, according to instruction of the measurement object type parameter, the UE does not measure or report the neighbor cell information of the measurement object and the blacklist cell information of the measurement obj ect.

### Scenario 3

If the UE undergoes intra-frequency handover that is based on a load, a CIO of a cell does not need to be used to distinguish cell handover priorities, and a cell with a minimum load satisfying a handover condition is selected to perform the handover, but a cell where handover is not allowed needs to be limited through blacklist cell information. Therefore, the network device may set the measurement object type parameter, Measobjtype, as no ncell in the generated measurement control information, and deliver the measurement control information to the UE, that is, requiring the UE not to consider neighbor cell information but to consider only the blacklist cell information during measuring and reporting.

After receiving the measurement control information from the network device, where the measurement control information includes the measurement object type parameter, according to instruction of the measurement object type parameter, the UE does not measure or report the neighbor cell information of the measurement object, but measures and reports the blacklist cell information of the measurement object.

### Scenario 4

If the UE performs a certain measurement, a CIO of a cell may be required to distinguish cell handover priorities, but a cell where handover is not allowed does not need to be limited through blacklist cell information. Therefore, the network device may set the measurement object type parameter Measobjtype as no black cell in the generated measurement control information, and deliver the measurement control information to the UE, that is, requiring the UE to consider only neighbor cell information but not to consider the blacklist cell information during measuring and reporting.

It should be noted that, no ncell, and no black cell which are mentioned in the foregoing scenarios are an exemplary expression form of the measurement obj ect type parameter, which may be further expressed in other forms during specific implementation, but the represented meanings are unchanged.

After receiving the measurement control information from the network device, where the measurement control information includes the measurement object type parameter, according to instruction of the measurement object type parameter, the UE measures and reports the neighbor cell information of the measurement object, but does not measure or report the blacklist cell information of the measurement obj ect.

In addition, for the method provided in this embodiment of the present invention, content of the measurement object type parameter, measobjtype, may be added to an existing protocol, such as 3GPP TS 36.331, whose protocol coding format may be as follows:

```
 -- ASN1START
 ReportConfigEUTRA::=       SEQUENCE {
    triggerType                   CHOICE {
         event                         SEQUENCE {
             eventId                         CHOICE {
                 eventA1                        SEQUENCE {
                     a1-Threshold                         ThresholdEUTRA
                 },
                 eventA2                        SEQUENCE {
                     a2-Threshold                         ThresholdEUTRA
                 },
                 eventA3                        SEQUENCE {
                     a3-Offset                            INTEGER (-30..30),
                     reportOnLeave                        BOOLEAN
                 },
                 eventA4                        SEQUENCE {
                     a4-Threshold                         ThresholdEUTRA
                 },
                 eventA5                        SEQUENCE {
                     a5-Threshold1                        ThresholdEUTRA,
                     a5-Threshold2                        ThresholdEUTRA
                 },
                 ...
             },
             hysteresis                        Hysteresis,
             timeToTrigger                     TimeToTrigger
         },
        periodical                             SEQUENCE {
             purpose                                     ENUMERATED {
                                              reportStrongestCells, reportCGI}
         }
     },
    triggerQuantity                         ENUMERATED {rsrp, rsrq},
    reportQuantity     ENUMERATED {sameAsTriggerQuantity, both},
    maxReportCells     INTEGER (1..maxCellReport),
    reportInterval     ReportInterval,
    reportAmount     ENUMERATED {r1, r2, r4, r8, r16, r32, r64, infinity},
    measobjtype   ENUMERATED {normal, no ncell, no black cell, no ncell and
    black cell},
    ...
  }
```

For example, in the foregoing protocol coding format, the "measobjtype ENUMERATED {normal, no ncell, no black cell, no ncell and black cell}" part is added. It should be noted that, the method provided in this embodiment of the present invention is not limited to be applicable to the 3GPP TS 36.331 protocol, which is only taken as an example for description here, the part may be further expressed in other forms during specific implementation, but meanings represented by the part are unchanged.

With the method for performing measurement and report on a cell provided in this embodiment of the present invention, for the same frequency point, the network device adds a measurement object type parameter to delivered measurement control information, and by parsing this parameter, the UE distinguishes, measures, and reports neighbor cell information and blacklist cell information which are to be measured and reported currently. In this way, the constraint that the same frequency point uses one measurement object can still be maintained, so as to reduce implementation complexity of the UE; meanwhile, for different measurements, measurement objects may be distinguished to some extent, so that the different measurements may be triggered by different measuring and reporting conditions, and therefore, measuring and reporting can be performed more quickly and accurately.

### Embodiment 6

A method for performing measurement and report on a cell provided in an embodiment of the present invention is adopted to remove constraint in the prior art that the same frequency must use the same measurement obj ect.

Specifically, a network device may generate multiple pieces of measurement control information, and each piece of measurement control information includes two parts of content: a measurement object and a measurement report, where the measurement object includes parameters such as neighbor cell information and blacklist cell information.

The network device delivers the generated multiple pieces of measurement control information to a UE. After receiving the measurement control information, for the same frequency point, the UE selects an appropriate measurement object according to a specific measuring and reporting mode to perform measuring. Herein, the UE may select to use the same measurement obj ect, for example, use the same neighbor cell information and the same blacklist cell information to perform measuring and reporting; and may also select to use a different measurement object, for example, use different neighbor cell information and different blacklist cell information to perform measuring and reporting.

With the method for performing measurement and report on a cell provided in this embodiment of the present invention, for the same frequency point, the network device can deliver multiple pieces of measurement control information, and the user equipment may select to use the same measurement object, or select to use different measurement objects for different measuring and reporting modes. Therefore, measuring and reporting can be performed more flexibly; and meanwhile, an unnecessary measurement is reduced, so that measuring and reporting can be performed more quickly and accurately.

The preceding descriptions are only specific implementation manners of the present invention, but are not intended to limit the protection scope of the present invention. Any variation or replacement that may be easily figured out by persons skilled in the art within the technical scope disclosed by the present invention shall be covered by the protection scope of the present invention. Therefore, the protection scope of the present invention shall be subj ect to the protection scope of the claims.

## Claims

1. A method for performing measurement and report on a cell, comprising:
receiving (S101) measurement control information from a network device, wherein the measurement control information comprises a measurement object and a measurement object type parameter, and the measurement object includes neighbor cell information and blacklist cell information; and
selectively measuring a neighbor cell according to the neighbor cell information and/or a blacklist cell according to the blacklist cell information and reporting (S102) measuring result of the neighbor cell and/or the blacklist cell;
wherein the selectively measuring the neighbor cell according to the neighbor cell information and/or the blacklist cell according to the blacklist cell information and reporting the measuring result of the neighbor cell and/or the blacklist cell specifically comprises:
measuring the neighbor cell and the blacklist cell and reporting the measuring result of the neighbor cell and the blacklist cell when the measurement object type parameter instructs that the neighbor cell and the blacklist cell are measured and the measuring result of the neighbor cell and the blacklist cell are reported;
measuring the blacklist cell and reporting the measuring result of the blacklist cell without measuring the neighbor cell or reporting the measuring result of the neighbor cell when the measurement object type parameter instructs that the blacklist cell is measured and the measuring result of the blacklist cell is reported;
measuring the neighbor cell and reporting the measuring result of the neighbor cell without measuring the blacklist cell or reporting the measuring result of the blacklist cell when the measurement object type parameter instructs that the neighbor cell is measured and the measuring result of the neighbor cell is reported; and
not measuring the neighbor cell and the blacklist cell nor reporting the measuring result of the neighbor cell and the blacklist cell when the measurement object type parameter instructs that the neighbor cell and the blacklist cell are not measured nor the measuring result of the neighbor cell and the blacklist cell are reported.

2. A user equipment, comprising:
a receiving unit (201), configured to receive measurement control information from a network device, wherein the measurement control information comprises a measurement object and a measurement object type parameter, and the measurement object includes neighbor cell information and blacklist cell information; and
a selective measuring and reporting unit (202), configured to selectively measure a neighbor cell according to the neighbor cell information and/or a blacklist cell according to the blacklist cell information and report measuring result of the neighbor cell and/or the blacklist cell;
wherein the selective measuring and reporting unit is specifically configured to:
measure the neighbor cell and the blacklist cell and report the measuring result of the neighbor cell and the blacklist cell when the measurement object type parameter instructs that the neighbor cell and the blacklist cell are measured and the measuring result of the neighbor cell and the blacklist cell are reported;
measure the blacklist cell and report the measuring result of the blacklist cell without measuring the neighbor cell or reporting the measuring result of the neighbor cell when the measurement object type parameter instructs that the blacklist cell is measured and the measuring result of the blacklist cell is reported;
measure the neighbor cell and report the measuring result of the neighbor cell without measuring the blacklist cell or reporting the blacklist cell when the measurement object type parameter instructs that the neighbor cell is measured and the measuring result of the neighbor cell is reported; and
not to measure the neighbor cell and the blacklist cell nor report the measuring result of the neighbor cell and the blacklist cell when the measurement object type parameter instructs that the neighbor cell and the blacklist cell are not measured nor the measuring result of the neighbor cell and the blacklist cell are reported.

3. A network device, comprising:
a measurement control information generation unit (301), configured to generate measurement control information, wherein the measurement control information comprises a measurement object and a measurement object type parameter, the measurement object includes neighbor cell information and blacklist cell information, the measurement object type parameter is used to instruct a user equipment to selectively measure a neighbor cell according to the neighbor cell information and/or a blacklist cell according to the blacklist cell information; and
a sending unit (302), configured to send the measurement control information to the user equipment so that the user equipment is instructed by the measurement object type parameter to selectively measure the neighbor cell according to the neighbor cell information and/or the blacklist cell according to the blacklist cell information, and report measuring result of the neighbor cell and/or the blacklist cell.

4. A communication system, comprising:
a network device (401) and a user equipment, wherein:
the network device is configured to generate measurement control information, wherein the measurement control information comprises a measurement object and a measurement object type parameter, and the measurement object includes neighbor cell information and blacklist cell information; and send the measurement control information to the user equipment; and
the user equipment (402) is configured to receive the measurement control information from the network device, wherein the measurement control information comprises the measurement object type parameter and the measurement object; and selectively measure a neighbor cell according to the neighbor cell information and/or a blacklist cell according to the blacklist cell information, and report measuring result of the neighbor cell and/or the blacklist cell;
wherein the user equipment is specifically configured to:
receive the measurement control information from the network device, wherein the measurement control information comprises the measurement object type parameter and the measurement obj ect;
measure the neighbor cell and the blacklist cell and report the measuring result of the neighbor cell and the blacklist cell when the measurement object type parameter instructs that the neighbor cell and the blacklist cell are measured and the measuring result of the neighbor cell and the blacklist cell are reported;
measure the blacklist cell and report the measuring result of the blacklist cell without measuring the neighbor cell or reporting the measuring result of the neighbor cell when the measurement object type parameter instructs that the blacklist cell is measured and the measuring result of the blacklist cell is reported;
measure the neighbor cell and report the measuring result of the neighbor cell without measuring the blacklist cell or reporting the measuring result of the blacklist cell when the measurement object type parameter instructs that the neighbor cell is measured and the measuring result of the neighbor cell is reported; and
not to measure the neighbor cell and the blacklist cell nor report the measuring result of the neighbor cell and the blacklist cell when the measurement object type parameter instructs that the neighbor cell and the blacklist cell are not measured nor the measuring result of the neighbor cell and the blacklist cell are reported.

## Patentansprüche

1. Verfahren für das Ausführen einer Messung und eines Berichts an einer Zelle, umfassend:
Empfangen (S101) von Steuerinformationen einer Messung von einer Netzeinheit, wobei die Steuerinformation für eine Messung ein Messobjekt und einen Typparameter des Messobjekts umfasst, und wobei zu dem Messobjekt Nachbarzelleninformationen und "Blacklist"-Zelleninformationen gehören; und
selektives Messen einer Nachbarzelle gemäß den Nachbarzelleninformationen und/oder einer "Blacklist"-Zelle gemäß den "Blacklist"-Zelleninformationen und Berichten (S 102) des Messergebnisses der Nachbarzelle und/oder der "Blacklist"-Zelle;
wobei das selektive Messen der Nachbarzelle gemäß den Nachbarzelleninformationen und/oder der "Blacklist"-Zelle gemäß den "Blacklist"-Zelleninformationen und das Berichten des Messergebnisses der Nachbarzelle und/oder der "Blacklist"-Zelle insbesondere umfasst:
Messen der Nachbarzelle und der "Blacklist"-Zelle und Berichten des Messergebnisses der Nachbarzelle und der "Blacklist"-Zelle, wenn der Typparameter des Messobjekts die Anweisung erteilt, die Nachbarzelle und die "Blacklist"-Zelle zu messen und das Messergebnis der Nachbarzelle und der "Blacklist"-Zelle zu berichten;
Messen der "Blacklist"-Zelle und Berichten des Messergebnisses der "Blacklist"-Zelle, ohne Messen der Nachbarzelle oder Berichten des Messergebnisses der Nachbarzelle, wenn der Typparameter des Messobjekts die Anweisung erteilt, die "Blacklist"-Zelle zu messen und das Messergebnis der "Blacklist"-Zelle zu berichten;
Messen der Nachbarzelle und Berichten des Messergebnisses der Nachbarzelle, ohne Messen der "Blacklist"-Zelle oder Berichten des Messergebnisses der "Blacklist"-Zelle, wenn der Typparameter des Messobjekts die Anweisung erteilt, die Nachbarzelle zu messen und das Messergebnis der Nachbarzelle zu berichten; und
weder Messen der Nachbarzelle und der "Blacklist"-Zelle noch Berichten des Messergebnisses der Nachbarzelle und der "Blacklist"-Zelle, wenn der Typparameter des Messobjekts die Anweisung erteilt, weder die Nachbarzelle und die "Blacklist"-Zelle zu messen noch das Messergebnis der Nachbarzelle und der "Blacklist"-Zelle zu berichten.

2. Benutzergerät, umfassend:
eine Empfangseinheit (201), die konfiguriert ist, Steuerinformationen einer Messung von einer Netzeinheit zu empfangen, wobei die Steuerinformation einer Messung ein Messobjekt und einen Typparameter des Messobjekts umfasst, und wobei zu dem Messobjekt Nachbarzelleninformationen und "Blacklist"-Zelleninformationen gehören; und
eine Einheit für selektives Messen und Berichten (202), die konfiguriert ist, eine Nachbarzelle gemäß den Nachbarzelleninformationen und/oder eine "Blacklist"-Zelle gemäß den "Blacklist"-Zelleninformationen zu messen und das Messergebnis der Nachbarzelle und/oder der "Blacklist"-Zelle zu berichten;
wobei die Einheit für selektives Messen und Berichten insbesondere konfiguriert ist für:
Messen der Nachbarzelle und der "Blacklist"-Zelle und Berichten des Messergebnisses der Nachbarzelle und der "Blacklist"-Zelle, wenn der Typparameter des Messobjekts die Anweisung erteilt, die Nachbarzelle und die "Blacklist"-Zelle zu messen und das Messergebnis der Nachbarzelle und der "Blacklist"-Zelle zu berichten;
Messen der "Blacklist"-Zelle und Berichten des Messergebnisses der "Blacklist"-Zelle, ohne Messen der Nachbarzelle oder Berichten des Messergebnisses der Nachbarzelle, wenn der Typparameter des Messobjekts die Anweisung erteilt, die "Blacklist"-Zelle zu messen und das Messergebnis der "Blacklist"-Zelle zu berichten;
Messen der Nachbarzelle und Berichten des Messergebnisses der Nachbarzelle, ohne Messen der "Blacklist"-Zelle oder Berichten der "Blacklist"-Zelle, wenn der Typparameter des Messobjekts die Anweisung erteilt, die Nachbarzelle zu messen und das Messergebnis der Nachbarzelle zu berichten; und
weder Messen der Nachbarzelle und der "Blacklist"-Zelle noch Berichten des Messergebnisses der Nachbarzelle und der "Blacklist"-Zelle, wenn der Typparameter des Messobjekts die Anweisung erteilt, weder die Nachbarzelle und die "Blacklist"-Zelle zu messen noch das Messergebnis der Nachbarzelle und der "Blacklist"-Zelle zu berichten.

3. Netzeinheit umfassend:
eine Erzeugereinheit für Steuerinformationen einer Messung (301), die konfiguriert ist, Steuerinformationen einer Messung zu erzeugen, wobei die Steuerinformationen einer Messung ein Messobjekt und einen Typparameter des Messobjekts umfassen, wobei zu dem Messobjekt Nachbarzelleninformationen und "Blacklist"-Zelleninformationen gehören; wobei der Typparameter des Messobjekts verwendet wird, einem Benutzergerät die Anweisung zu erteilen, eine Nachbarzelle gemäß den Nachbarzelleninformationen und/oder eine "Blacklist"-Zelle gemäß den "Blacklist"-Zelleninformationen selektiv zu messen; und
eine Sendeeinheit (302), die konfiguriert ist, die Steuerinformationen einer Messung an das Benutzergerät zu senden, sodass das Benutzergerät von dem Typparameter des Messobjekts die Anweisung erhält, die Nachbarzelle gemäß den Nachbarzelleninformationen und/oder die "Blacklist"-Zelle gemäß den "Blacklist"-Zelleninformationen selektiv zu messen und das Messergebnis der Nachbarzelle und/oder der "Blacklist"-Zelle zu berichten.

4. Kommunikationssystem, umfassend:
eine Netzeinheit (401) und ein Benutzergerät, wobei:
die Netzeinheit konfiguriert ist, Steuerinformationen einer Messung zu erzeugen, wobei die Steuerinformationen einer Messung ein Messobjekt und einen Typparameter des Messobjekts umfassen, und wobei zu dem Messobjekt Nachbarzelleninformationen und "Blacklist"-Zelleninformationen gehören; und die Steuerinformationen einer Messung an das Benutzergerät zu senden; und das Benutzergerät (402) konfiguriert ist, die Steuerinformationen einer Messung von der Netzeinheit zu empfangen, wobei die Steuerinformationen einer Messung den Typparameter des Messobjekts und das Messobjekt umfassen; und eine Nachbarzelle gemäß den Nachbarzelleninformationen und/oder eine "Blacklist"-Zelle gemäß den "Blacklist"-Zelleninformationen selektiv zu messen und das Messergebnis der Nachbarzelle und/oder der "Blacklist"-Zelle zu berichten;
wobei das Benutzergerät insbesondere konfiguriert ist zum:
Empfangen der Steuerinformationen einer Messung von der Netzeinheit, wobei die Steuerinformationen einer Messung den Typparameter des Messobjekts und das Messobjekt umfassen;
Messen der Nachbarzelle und der "Blacklist"-Zelle und Berichten des Messergebnisses der Nachbarzelle und der "Blacklist"-Zelle, wenn der Typparameter des Messobjekts die Anweisung erteilt, die Nachbarzelle und die "Blacklist"-Zelle zu messen und das Messergebnis der Nachbarzelle und der "Blacklist"-Zelle zu berichten;
Messen der "Blacklist"-Zelle und Berichten des Messergebnisses der "Blacklist"-Zelle, ohne Messen der Nachbarzelle oder Berichten des Messergebnisses der Nachbarzelle, wenn der Typparameter des Messobjekts die Anweisung erteilt, die "Blacklist"-Zelle zu messen und das Messergebnis der "Blacklist"-Zelle zu berichten;
Messen der Nachbarzelle und Berichten des Messergebnisses der Nachbarzelle, ohne Messen der "Blacklist"-Zelle oder Berichten des Messergebnisses der "Blacklist"-Zelle, wenn der Typparameter des Messobjekts die Anweisung erteilt, die Nachbarzelle zu messen und das Messergebnis der Nachbarzelle zu berichten; und
weder Messen der Nachbarzelle und der "Blacklist"-Zelle noch Berichten des Messergebnisses der Nachbarzelle und der "Blacklist"-Zelle, wenn der Typparameter des Messobjekts die Anweisung erteilt, weder die Nachbarzelle und die "Blacklist"-Zelle zu messen noch das Messergebnis der Nachbarzelle und der "Blacklist"-Zelle zu berichten.

## Revendications

1. Procédé de réalisation d'une mesure et d'un signalement sur une cellule, consistant à :
recevoir (S101) des informations de commande de mesure en provenance d'un dispositif de réseau, dans lequel les informations de commande de mesure comprennent un objet de mesure et un paramètre de type d'objet de mesure, et l'objet de mesure comprend des informations de cellule voisine et des informations de cellule de liste noire ; et
mesurer sélectivement une cellule voisine conformément aux informations de cellule voisine et/ou une cellule de liste noire conformément aux informations de cellule de liste noire et signaler (S 102) le résultat de mesure de la cellule voisine et/ou de la cellule de liste noire ;
dans lequel la mesure sélective de la cellule voisine conformément aux informations de cellule voisine et/ou la cellule de liste noire conformément aux informations de cellule de liste noire et le signalement du résultat de mesure de la cellule voisine et/ou de la cellule de liste noire consistent spécifiquement à :
mesurer la cellule voisine et la cellule de liste noire et signaler le résultat de mesure de la cellule voisine et de la cellule de liste noire lorsque le paramètre de type d'objet de mesure indique l'instruction selon laquelle la cellule voisine et la cellule de liste noire sont mesurées et les résultats de mesure de la cellule voisine et de la cellule de liste noire sont signalés ;
mesurer la cellule de liste noire et signaler le résultat de mesure de la cellule de liste noire sans mesurer la cellule voisine ou signaler le résultat de mesure de la cellule voisine lorsque le paramètre de type d'objet de mesure indique l'instruction selon laquelle la cellule de liste noire est mesurée et le résultat de mesure de la cellule de liste noire est signalé ;
mesurer la cellule voisine et signaler le résultat de mesure de la cellule voisine sans mesurer la cellule de liste noire ou signaler le résultat de mesure de la cellule de liste noire lorsque le paramètre de type d'objet de mesure indique l'instruction selon laquelle la cellule voisine est mesurée et le résultat de mesure de la cellule voisine est signalé ; et
ne pas mesurer la cellule voisine et la cellule de liste noire ni signaler le résultat de mesure de la cellule voisine et de la cellule de liste noire lorsque le paramètre de type d'objet de mesure indique l'instruction selon laquelle la cellule voisine et la cellule de liste noire ne sont pas mesurées et les résultats de mesure de la cellule voisine et de la cellule de liste noire ne sont pas signalés.

2. Equipement utilisateur, comprenant :
une unité de réception (201), configurée pour recevoir des informations de commande de mesure en provenance d'un dispositif de réseau, dans lequel les informations de commande de mesure comprennent un objet de mesure et un paramètre de type d'objet de mesure, et l'objet de mesure comprend des informations de cellule voisine et des informations de cellule de liste noire ; et
une unité de mesure sélective et de signalement (202) configurée pour mesurer sélectivement une cellule voisine conformément aux informations de cellule voisine et/ou une cellule de liste noire conformément aux informations de cellule de liste noire et signaler le résultat de mesure de la cellule voisine et/ou de la cellule de liste noire ;
dans lequel l'unité de mesure sélective et de signalement est spécifiquement configurée pour :
mesurer la cellule voisine et la cellule de liste noire et signaler le résultat de mesure de la cellule voisine et de la cellule de liste noire lorsque le paramètre de type d'objet de mesure indique l'instruction selon laquelle la cellule voisine et la cellule de liste noire sont mesurées et les résultats de mesure de la cellule voisine et de la cellule de liste noire sont signalés ;
mesurer la cellule de liste noire et signaler le résultat de mesure de la cellule de liste noire sans mesurer la cellule voisine ou signaler le résultat de mesure de la cellule voisine lorsque le paramètre de type d'objet de mesure indique l'instruction selon laquelle la cellule de liste noire est mesurée et le résultat de mesure de la cellule de liste noire est signalé ;
mesurer la cellule voisine et signaler le résultat de mesure de la cellule voisine sans mesurer la cellule de liste noire ou signaler la cellule de liste noire lorsque le paramètre de type d'objet de mesure indique l'instruction selon laquelle la cellule voisine est mesurée et le résultat de mesure de la cellule voisine est signalé ; et
ne pas mesurer la cellule voisine et la cellule de liste noire ni signaler le résultat de mesure de la cellule voisine et de la cellule de liste noire lorsque le paramètre de type d'objet de mesure indique l'instruction selon laquelle la cellule voisine et la cellule de liste noire ne sont pas mesurées et les résultats de mesure de la cellule voisine et de la cellule de liste noire ne sont pas signalés.

3. Dispositif de réseau, comprenant :
une unité génératrice d'informations de commande de mesure (301), configurée pour générer des informations de commande de mesure, dans lequel les informations de commande de mesure comprennent un objet de mesure et un paramètre de type d'objet de mesure, l'objet de mesure comprend des informations de cellule voisine et des informations de cellule de liste noire, le paramètre de type d'objet de mesure est utilisé pour indiquer à un équipement utilisateur l'instruction de mesurer sélectivement une cellule voisine conformément aux informations de cellule voisine et/ou une cellule de liste noire conformément aux informations de cellule de liste noire ; et
une unité d'envoi (302), configurée pour envoyer les informations de commande de mesure à l'équipement utilisateur de manière à ce que l'équipement utilisateur reçoive l'instruction, par le biais du paramètre de type d'objet de mesure, de mesurer sélectivement la cellule voisine conformément aux informations de cellule voisine et/ou la cellule de liste noire conformément aux informations de cellule de liste noire, et de signaler le résultat de mesure de la cellule voisine et/ou de la cellule de liste noire.

4. Système de communication, comprenant :
un dispositif de réseau (401) et un équipement utilisateur, dans lequel :
le dispositif de réseau est configuré pour générer des informations de commande de mesure, dans lequel les informations de commande de mesure comprennent un objet de mesure et un paramètre de type d'objet de mesure, et l'objet de mesure comprend des informations de cellule voisine et des informations de cellule de liste noire ; et
envoyer les informations de commande de mesure à l'équipement utilisateur ; et
l'équipement utilisateur (402) est configuré pour recevoir les informations de commande de mesure en provenance du dispositif de réseau, dans lequel les informations de commande de mesure comprennent le paramètre de type d'objet de mesure et l'objet de mesure ; et mesurer sélectivement une cellule voisine conformément aux informations de cellule voisine et/ou une cellule de liste noire conformément aux informations de cellule de liste noire, et signaler le résultat de mesure de la cellule voisine et/ou de la cellule de liste noire ;
dans lequel l'équipement utilisateur est spécifiquement configuré pour :
recevoir les informations de commande de mesure en provenance du dispositif de réseau, dans lequel les informations de commande de mesure comprennent le paramètre de type d'objet de mesure et l'objet de mesure ;
mesurer la cellule voisine et la cellule de liste noire et signaler le résultat de mesure de la cellule voisine et de la cellule de liste noire lorsque le paramètre de type d'objet de mesure indique l'instruction selon laquelle la cellule voisine et la cellule de liste noire sont mesurées et les résultats de mesure de la cellule voisine et de la cellule de liste noire sont signalés ;
mesurer la cellule de liste noire et signaler le résultat de mesure de la cellule de liste noire sans mesurer la cellule voisine ou signaler le résultat de mesure de la cellule voisine lorsque le paramètre de type d'objet de mesure indique l'instruction selon laquelle la cellule de liste noire est mesurée et le résultat de mesure de la cellule de liste noire est signalé ;
mesurer la cellule voisine et signaler le résultat de mesure de la cellule voisine sans mesurer la cellule de liste noire ou signaler le résultat de mesure de la cellule de liste noire lorsque le paramètre de type d'objet de mesure indique l'instruction selon laquelle la cellule voisine est mesurée et le résultat de mesure de la cellule voisine est signalé ; et
ne pas mesurer la cellule voisine et la cellule de liste noire ni signaler le résultat de mesure de la cellule voisine et de la cellule de liste noire lorsque le paramètre de type d'objet de mesure indique l'instruction selon laquelle la cellule voisine et la cellule de liste noire ne sont pas mesurées et les résultats de mesure de la cellule voisine et de la cellule de liste noire ne sont pas signalés.
